# EUROPEAN PATENT SPECIFICATION

(11) **EP 4 020 238 B1**
(45) Date of publication and mention of the grant of the patent: **12.06.2024**
(21) Application number: 21197466.2
(22) Date of filing: 17.09.2021
(51) Int. Cl.: G06F 12/14, G06F 12/1036

(54) **METHOD AND APPARATUS FOR RUN-TIME MEMORY ISOLATION ACROSS DIFFERENT EXECUTION REALMS**
VERFAHREN UND VORRICHTUNG ZUR LAUFZEITSPEICHERISOLIERUNG ÜBER VERSCHIEDENE AUSFÜHRUNGSWEGE
PROCÉDÉ ET APPAREIL D'ISOLATION DE MÉMOIRE D'EXÉCUTION SUR DIFFÉRENTES PARTITIONS D'EXÉCUTION

(30) Priority: 24.12.2020 US 202017134052
(43) Date of publication of application: 29.06.2022
(73) Proprietor: INTEL Corporation, Santa Clara, CA 95054 (US)
(72) Inventor: TOLL, Thomas, Portland, 97201 (US); JAYARAM MASTI, Ramya, Hillsboro, 97124 (US); HUNTLEY, Barry E., Hillsboro, 97124 (US); VON BOKERN, Vincent, Rescue, 95672 (US); CHHABRA, Siddhartha, Portland, 97229 (US); KHOSRAVI, Hormuzd M., Portland, 97229 (US); SHANBHOGUE, Vedvyas, Austin, 78738 (US); GERZON, Gideon, 30900 Zichron Yaakov (IL)
(74) Representative: Goddar, Heinz J.

(56) References cited:
- EP-A1- 2 608 044
- EP-A1- 3 614 284
- US-A1- 2020 159 677

## Description

### FIELD OF INVENTION

The field of invention pertains generally to the computing sciences, and, more specifically, to a method and apparatus for run-time memory isolation across different execution realms.

### BACKGROUND

Computer system designers are increasingly seeking ways to process more and more information. A challenge, however, is ensuring that the main memory space that is assigned to the various software programs that are executed by a computer system are sufficiently isolated from unwanted accesses by other software programs. A background prior art is represented by Publication US2020/159677 A1 which discloses Isolation of REALM domains using memory access control techniques for enforcing access rights for particular memory regions.

### BREIF DESCRIPTION OF THE DRAWINGS

The present invention is illustrated by way of example and not limitation in the figures of the accompanying drawings, in which like references indicate similar elements and in which:
FIG. 1 shows a high-performance computing environment;
FIG. 2a shows a processor semiconductor chip having circuitry to confirm that a software process or thread is accessing a realm it is permitted to operate out of;
Fig. 2b shows a memory controller having circuitry to confirm that a software process or thread is accessing a realm it is permitted to operate out of;
FIG. 3 a shows a method performed by the processor semiconductor chip of FIG. 2a;
FIG. 3b shows a method that can be performed by embodiment(s) of the processor semiconductor chip of FIG. 2a;
FIG. 3c shows a method that can be performed by embodiment(s) of the processor semiconductor chip of FIG. 2a;
FIG. 3d shows a method that can be performed by embodiment(s) of the processor semiconductor chip of FIG. 2a;
FIG. 4 is a block diagram of an exemplary computer architecture;
FIG. 5 is a block diagram of a first more specific exemplary system in accordance with some embodiment;
FIG. 6 is a block diagram of a second more specific exemplary system in accordance with some embodiments;
FIG. 7 is a block diagram of a System-on-a-Chip (SoC) in accordance with some embodiments;
FIG. 8 is a block diagram contrasting the use of a software instruction converter to convert binary instructions in a source instruction set to binary instructions in a target instruction set according to some embodiments.

### DETAILED DESCRIPTION

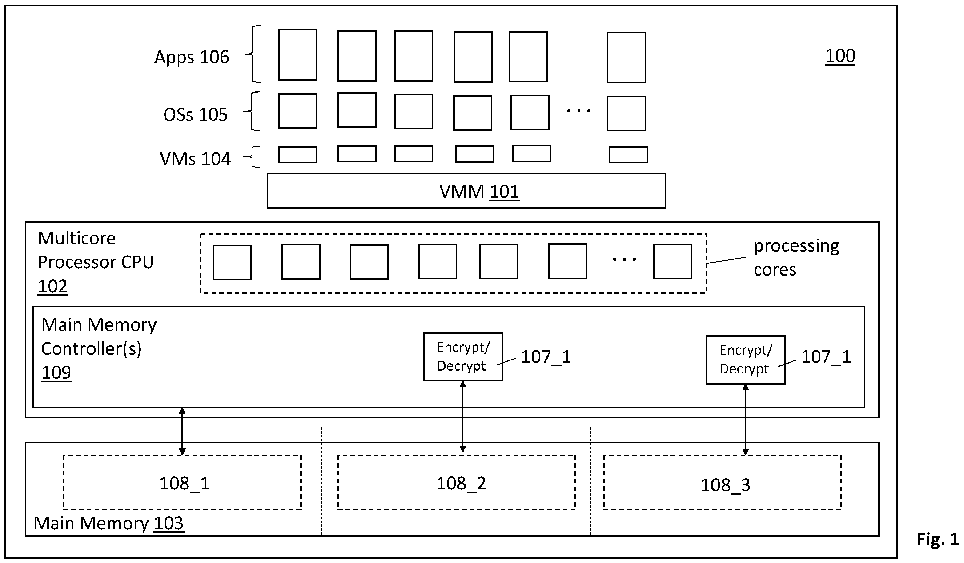

Fig. 1 shows a high-performance computing environment 100 that includes multiple isolation technologies for securing the various software programs that the computing environment executes. Here, the security of a computing environment is largely dependent upon the extent to which different software programs can be prevented from tampering with and/or observing each other's execution.

One form of isolation is achieved through the use of virtual machines. Here, as is known in the art, a virtual machine monitor (VMM) 101 or hypervisor executes on one or more hardware CPUs 102, e.g., as a lowest level of software (e.g., just above hardware device drivers such as DIMM device drivers, SSD device drivers, and other firmware). The VMM 101 fully comprehends the execution resources of the underlying CPU hardware 102 (e.g., cores, instruction execution pipelines, etc.) and the capacity and address space of the main memory hardware 103 and allocates these hardware resources to multiple virtual machines (VMs) 104 that run on the VMM 101.

Each VM is an instance of program code that emulates a hardware processor (and other components of a hardware platform). Instances of operating system (OS) software 105 are then configured to execute on their own dedicated VM. That is, for example, each unique OS instance is supported by its own dedicated, underlying VM. As such, each such OS instance, and any application software 106 that executes on it, views their particular underlying VM as including their own dedicated CPU.

Various CPU manufacturers have enhanced their processors to deploy software according to the VMM/VM/OS structure described above. For example, CPU manufacturers have enhanced their CPUs with special VM or VMM minded instructions. Such enhancements can be referred to as "VM" enhancements.

Another type of isolation, referred to as a trusted execution environment (TEE), attempts to isolate regions of main memory. Main memory 103 is used as the primary repository from which an executing program reads instructions and reads and writes data.

Referring to Fig. 1, according to one implementation, traditional main memory space 109_1 is allocated by the VMM to any VM/OS/application(s) instances that execute on it. That is, as per traditional software implementation, main memory space 109_1 is specially allocated for each separate instance of software (e.g., each VM instance).

However, as mentioned above, a program's security can be compromised if the content/state of its instruction and/or data in main memory 103 is able to be tampered with and/or observed by another program. In various implementations, the aforementioned allocation of different memory space to each of the VM, OS and application instances does not by itself warrant sufficient isolation between one another to adequately protect them.

As such, another type of isolation, referred to as a trusted execution environment (TEE), attempts to isolate regions of main memory. Specifically, in order to isolate a program's main memory content from other programs, TEE solutions commonly embed an encryption/decryption unit 107_1, 107_2 within the CPU 102 (commonly within the CPU's main memory controller(s) 109). For ease of discussion, the following discussion assumes TEE includes encryption/decryption but those of ordinary skill will recognize that encryption/decryption is not a strict requirement for a TEE.

Before instructions/data are written into main memory 103 the instructions/data are encrypted so that, even if they were accessed from main memory 103 by another program that is not supposed to access them, the other program cannot make any sense of them (they are encrypted). When such instructions/data are read from main memory 103 by a program that is supposed to have access to them, they are decrypted and then used normally.

Thus, according to a first TEE approach, separate instances of application software 106 can be protected by allocating special memory space 108_2 to them that is protected with encryption/decryption 107_1 as described above. In this case, any memory access by an application to its protected region 108_2 invokes encryption/decryption unit 107_1. A memory access made to the same protected region 108_2 by any other program does not invoke the encryption/decryption unit 107_2 protection thereby rendering the access useless.

Another more recent TEE technology isolates a VM from the VMM by placing a layer of software between the VM and the VMM. Here, each VM that is protected in this manner is provided a TEE protected region of main memory 108_3 that is private to the VM (only the VM can access it). When the VM accesses its private memory region 108_3, encryption/decryption unit 107_2 is engaged. The VM is also provided another region of memory space that is shared with other software processes and through which, e.g., the VM receives input data and provides output data.

As with VMM extensions, various CPU manufacturers have enhanced their processors for the deployment of software with TEE technology (e.g., Software Guard eXtensions (SGX) and Trust Domain Extensions (TDX) from Intel Corporation, and, Secure Encrypted Virtualization (SEV) from Advanced Micro Devices (AMD) Corporation). Also, although the discussion of Fig. 1 above indicated that the VMM 101 operates out memory space 108_1 that does not have any TEE protection, it is possible to incorporate TEE technology into the memory space 108_1 that the VMM operates out of.

Regardless, a number of different memory regions 108_1, 108_2, 108_3 (or "realms") can exist on a computing platform, where each realm has its own specific memory access process. For example, with respect to Fig. 1, a first realm corresponds to region 108_1 having no TEE access. A second realm corresponds to region 108_2 and has a first type of TEE access that uses encryption/decryption unit 107_1. A third realm corresponds to region 108_3 and has a second type of TEE access that uses encryption/decryption unit 107_2.

In a high-performance computing environment that supports at least two realms as discussed in the example just above, it is expected that various software threads will operate within one of these realms. For instance, a first set of threads can be allocated to a VMM that operates out of the first realm 108_1, a second set of threads can be allocated to applications that operate out of the second realm 108_2, and, a third set of threads can be allocated to VMs that operate out of the third realm 108_3.

Here, for instance, a cloud service provider of CPU compute resources might offer different degrees of protection that their customers can choose from. For example, a first customer might choose to operate entirely out of the first realm 108_1, a second customer might choose to operate its applications out of the second realm 108_2 but not operate its VMs out of the third realm 108_3, a third customer may choose to operate its applications out of the second realm 108_2 and its VMs out of the third realm 108_3, etc.

Regardless, in order to preserve isolation across all of the realms, software processes should execute such that a memory access instruction executed from one realm is not permitted to access the memory region of another realm. That is, for example, an application that operates out of the second realm 108_2 should not be able to execute memory instructions that access the private memory of a VM that operates out of the third realm 108_3, nor, should the VM be able to execute memory instructions that access the application's memory space in the second realm 108_2.

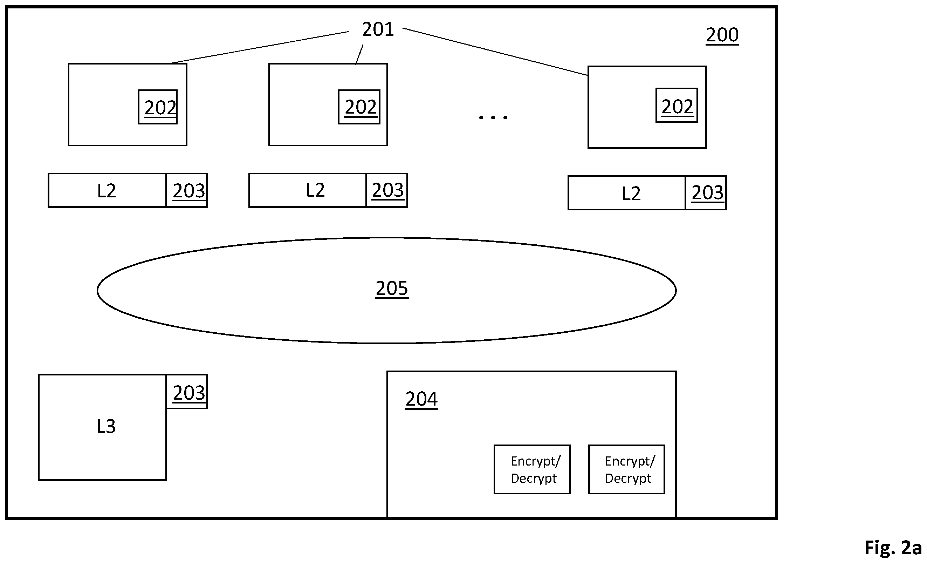

Fig. 2a shows a realm aware processor 200 having CPU cores 201 that are designed to tag memory access requests with an identifier of the realm that is associated with the software process or thread that executed the request's corresponding memory access instruction.

Here, for instance, as part of the logical to physical address translation performed by the memory unit of an instruction execution pipeline that executes the memory access instruction, an identifier of the process's realm is generated along with the targeted physical address. As such, the memory access request that is generated as a consequence of the execution of the memory access instruction includes both the targeted physical address and the realm identifier.

If/when the memory access request is received by the processor's main memory controller 204, the memory controller 204 is able to determine if the physical address space that is targeted by the request corresponds to the realm that is identified by the realm ID that is contained in the request (for ease of discussion, the cache hierarchy that exists between the cores and the memory controller is addressed in more detail further below).

Here, continuing with the exemplary computing environment of Fig. 1 having three different realms as discussed above, the memory controller 204 comprehends: 1) which main memory physical address space corresponds to the first realm; 2) which main memory physical address space corresponds to the second realm; and, 3) which main memory physical address space corresponds to the third realm.

When the memory controller 204 receives the request, it uses the request's physical address to determine which realm the request's physical address is targeting (first, second or third). The memory controller 204 then compares this determined realm with the identifier of the realm that was embedded in the request. If there is a match (the targeted realm matches the identified realm), the memory controller 204 proceeds to service the request (the requested memory access is performed). By contrast, if there is a mismatch (the targeted realm does not match the identified realm), the memory controller 204 refuses to service the request (the requested memory access is not performed). As such, rather than sending a "completion" confirmatory response to the software instance that issued the memory request, the memory controller 204 instead sends a message that the request was not performed because there was a mismatch between the targeted physical address and the physical address space that the software instance has been allocated to access.

A more detailed discussion of the functionality that is added to the processing cores 201 to generate the requests and the memory controller 204 to process them is provided immediately below.

As is known in the art, each CPU processing core 201 includes multiple instruction pipelines (not shown in Fig. 2a for illustrative ease). The execution of memory access instruction includes the pipeline (specifically, a memory access unit within the pipeline) translating the logical memory address that is specified in the instruction to a physical address in main memory that has been allocated for the pipeline's software thread. Here, a translation lookaside buffer (TLB) is used as a lookup table where, typically, some combination of the software's process ID or thread ID are combined with the logical address as a lookup parameter into the TLB.

The TLB has multiple entries where each entry in the TLB has a different combination of process/thread ID and logical address as the lookup parameter information. The output information for each entry specifies the physical address of the page in memory where the targeted address is found. The processor then constructs a memory request having the physical address.

In high-performance computing systems, commonly, there are multiple memory controllers 204 each having their own dedicated slice of system memory address space. A network 205 exists between the memory controllers 204 and the processing cores 201 to transport memory access requests between the cores and controllers. Based on the physical address in a memory access request, the request is routed over the network 205 to the correct memory controller.

Here, according to various embodiments, each processing core 201 is designed to determine which realm a process/thread belongs to, e.g., from information stored in special/protected register space 202 of the CPU core 201. Here, for instance, a trusted entity, trusted platform module and/or other secure software, firmware and/or hardware is used to write information to the protected register space 202 that correlates a given memory transaction from a software process or thread to a realm ID. A given process/thread can access memory across different realms or may be constrained to a single realm, e.g., depending on configuration.

According to one approach, when the register space 202 is written to with the above described information, logic circuitry within the CPU core 201 securely adds the appropriate realm ID from the register space 202 into the output information of each TLB entry. Thus, when a memory access instruction is executed and the TLB look-up is performed, the TLB provides not only the correct physical address but also the corresponding realm ID. The CPU core then constructs the memory access request having both the physical address and the realm ID.

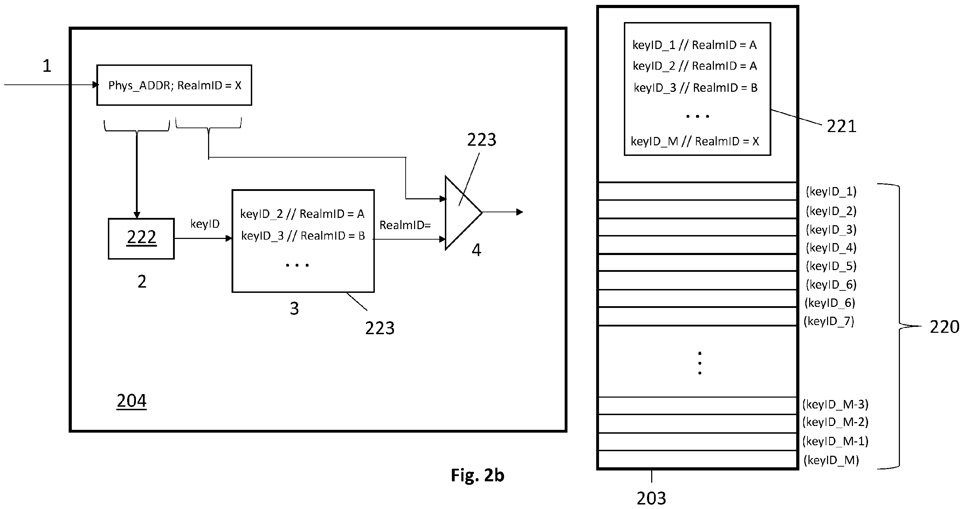

With respect to the memory controllers 204, referring to Fig. 2b, in an embodiment, physical main memory 203 is considered to be divided into fixed-size blocks 220 (e.g., 4kB) and a single key ID is associated with each block (each block has its own unique key ID). Each realm is associated with a set of key IDs, and, in various embodiments, each key ID is associated with a single realm at any point in time. The key ID represents a set of memory attributes (e.g. encryption key, algorithm) used when accessing the associated memory. Additionally, mapping table information 221 tracks the key ID and hence the realm ID associated with each block.

As discussed above, a memory request that is received 1 by the memory controller 204 contains both a physical address component and a realm ID component. Logic circuitry 222 within the memory controller 204 converts 2 the physical address to a corresponding key ID (e.g., with some mathematical formulation). The key ID is then used as a look-up 3 parameter into a cache 223 that contains the more recently used and/or more frequently used key ID to realm ID entries from the mapping table information 221 information in main memory 203. If the key ID generated 2 from the request's physical address matches the key ID of an entry in the cache 223, the corresponding realm ID from the cache entry is compared 4 by comparator 224 with the realm ID component in the received request.

If the realm IDs match the requested memory access is performed (otherwise an error message is sent to the requestor). If the key ID generated 2 from the request's physical address does not match the key ID of an entry in the cache 223, the mapping table information 221 is accessed in main memory to obtain the entry having the key ID. Again, if the realm ID that is listed for the key ID in the mapping table entry matches the realm ID in the request 2 the requested memory access is performed (otherwise an error message is performed).

In various embodiments the cache 223 does not exist and at least a portion of the mapping information having the entry for the key ID generated from the physical address is fetched from memory 203 and stored in on-board register space (or other information keeping space) within the memory controller 204. The process then continues as described above.

In an alternate embodiment, the sizes of the blocks in memory 203 are large enough such that the entirety of the mapping information 221 can be held in the memory controller 204. In this case, the cache 223 is replaced with, e.g., a content addressable memory (CAM) with supporting logic that provides a realm ID in response to the key ID that was generated from the request's physical address. As such, when a memory controller 204 receives a memory access request, it applies the physical address to the CAM. In response, the CAM provides the realm ID that the physical address falls within. If the realm ID returned from the CAM matches the realm ID in the request, the memory controller 204 proceeds to process the request.

As with the special register space 202 in the processing cores 201, the register space 203 in the memory controller 204 that correlates physical address space to realm ID is protected against unauthorized access. This can be achieved through standard address space protection mechanisms e.g. range registers.

Regardless of which (or other) hardware approach is taken, in various embodiments, the mapping information 221 (whether kept in memory 203 or in the memory controller 204) is made accessible only through a trusted entity on the platform. Moreover, more generally, note that both the cache 223 of Fig. 2b and the aforementioned CAM can be implemented with on board register space and/or memory space, hereinafter collectively referred to as "information keeping space".

Moreover, a single process or thread can be allowed access to multiple realms. In this case, the realm ID for each of the realms that the process or thread has access to is included in a single memory access request. The memory controller converts the request's physical address into a key ID. If the realm ID in the mapping information 221 that is returned from the key ID matches any of the realm IDs in the request the memory access is allowed to go forward. Further still, some realms are constructed with overlapping blocks of memory. In this case, the entries in the mapping information 221 for these blocks will have more than one realm ID for a single key ID (the IDs of the multiple realms that the block belongs to). Here, if a request's physical address maps to the key ID of one of these blocks, there will be multiple returned realm IDs from the mapping information 221. If any of these realm IDs match the one or more realm IDs in the request the memory access is allowed to continue.

Finally, as is known in the art, multiple caching levels can exist between the processing cores 201 and the memory controllers 204 within a computing system. Here, for instance, an L1 cache may exist for each instruction execution pipeline in a core (not shown in Fig. 2 for illustrative ease), an L2 cache may exist for each processing cores, and L3 (and L4) caches may exist for multiple processing cores (e.g., an on die SRAM and/or eDRAM L3 cache and an external stacked DRAM memory as an L4 cache). Commonly, the item that is targeted by a memory access request is found in one of these caches rendering access to main memory through the memory controller 204 unnecessary.

Here, in various embodiments, each of these caches are also designed to include the mapping information 221 as described above with respect to the memory controllers 204. That is, like the memory controllers 204, the caches have access to or are integrated with the mapping information 221 or are otherwise structured to correlate physical address ranges in main memory to their corresponding realm IDs.

For example, according to one approach, the tag for a cache line that is kept in a cache also includes the realm ID from the entry in the mapping information 221 for that cache line's key ID (block). When a memory access request is received at the cache and there is a cache hit (the request's physical address matches the physical address of a cache line in the cache), the realm ID in the request is compared with the realm ID in the cache line's tag. If they match, the request is serviced from the cache. Here, so that the realm ID from the mapping information 221 can track a particular cache line and be added to that cache line's tag, when the cache line is first accessed from main memory, the memory controller 204 returns the realm ID from the mapping information 221 along with the cache line. Thereafter, so long as the cache line exists in the caching hierarchy, the realm ID is kept with the cache line so it can be added to its tag.

In another embodiment, the cache hierarchy is structured such that, based on the mapping information 221: 1) only cache lines belonging to a same realm are cached in a particular cache; and, 2) memory access requests are directed to a particular cache based on the request's physical address. If the realm ID embedded in the request does not correspond to the realm that the cache is dedicated to, the request is not serviced from the cache. Here, the caches can be organized as network destinations and the network between caching levels can have routing/switching tables that: 1) route requests to a particular cache using the request's physical address as a network destination address; 2) move a cache line between caching levels to the correct cache based on the cache line's appended realm ID. The routing/switching table (and caches) are configured based on the mapping information.

However, in the case of a system having multiple memory controllers each with its own slice of main memory address space, the physical address to realm ID information 203 that is maintained for a particular memory controller is relegated to the memory physical address range that the memory controller provides access to. By contrast, the corresponding information used by the caches should include, e.g., address ranges across main memory space (e.g., across multiple memory controllers) because items in a same cache may be directed to many different system memory address range slices.

Although the register space 202, 203 discussed above has been described as being within the processing cores and memory controllers, respectively, it is possible that either or both of these may be implemented partially or wholly as a shared resource that multiple cores or memory controllers have access to (e.g., a single instance of register space 202 is dedicated for multiple cores, a single instance of register space 203 is for multiple memory controllers).

Any of the circuitry discussed above with respect to Fig. 2 can be implemented with logic circuitry (e.g., dedicated hardwire logic circuitry and/or programmable logic circuitry such as field programmable gate array (FPGA) logic circuitry). The processor of Fig. 2 may also be enhanced with instructions to at least write to the above identified special registers, CAMs or other circuitry 202, 203 used to hold the process ID/thread ID correlation to realm ID, and, physical address space correlation to realm ID.

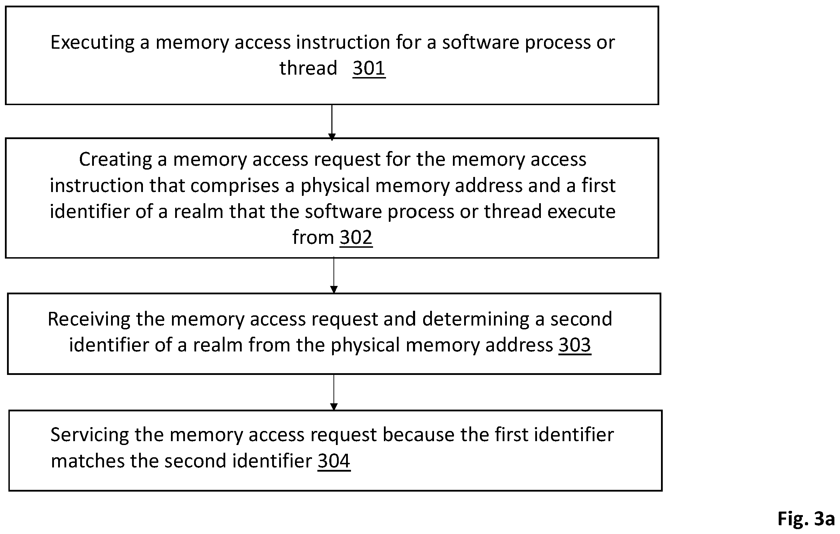

Fig. 3a shows a process described above. As observed in Fig. 3a, the process includes executing 301 a memory access instruction for a software process or thread. The process includes creating a memory access request 302 for the memory access instruction that comprises a physical memory address and a first identifier of a realm that the software process or thread execute from. The process includes receiving the memory access request and determining a second identifier of a realm from the physical memory address 303. The process includes servicing the memory access request 304 because the first identifier matches the second identifier.

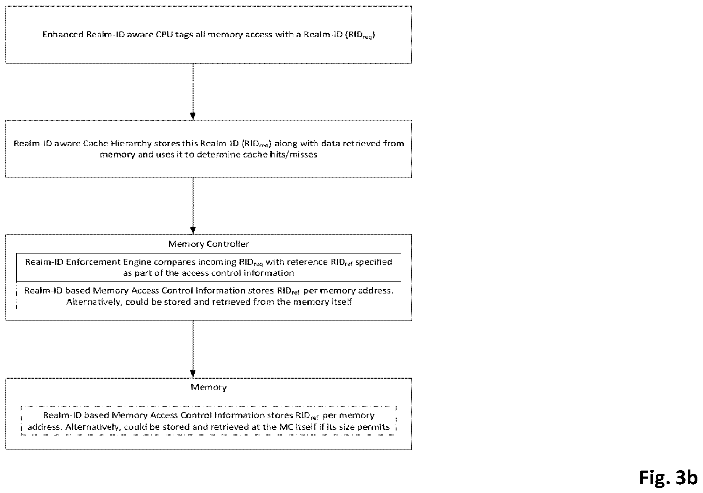

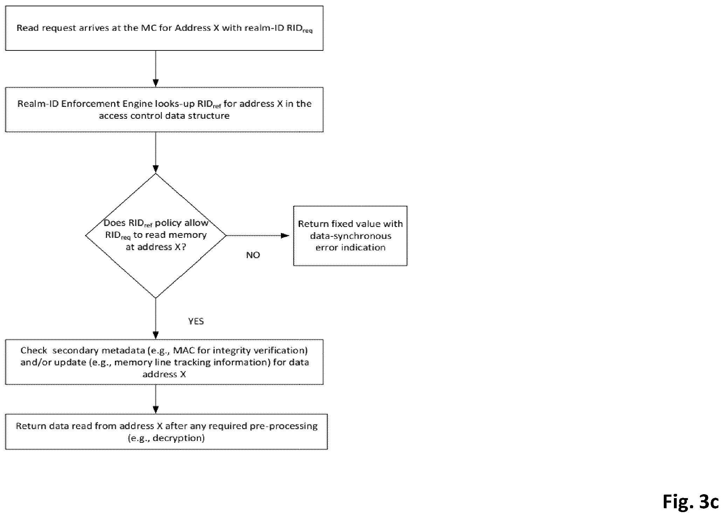

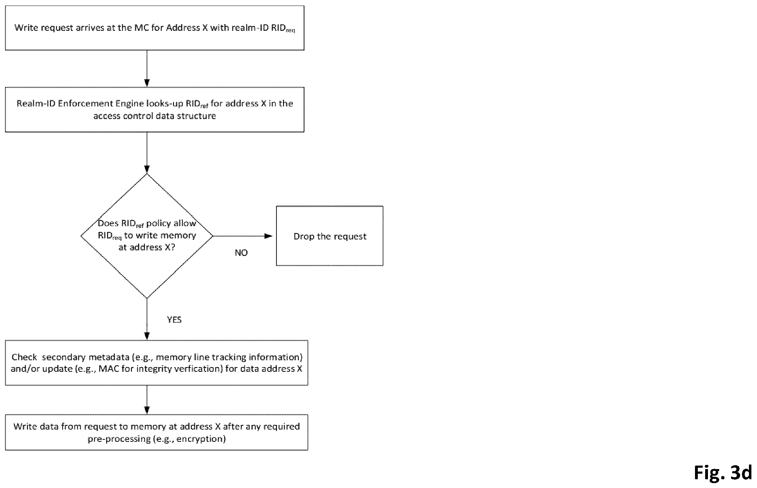

Figs. 3b, 3c and 3d depict methods that can be executed by embodiment(s) of the processor described above. Such embodiment(s) can be characterized as a processor having an access control information structure that contains details regarding the realm-ID (RID_{ref}) that can access a given memory address. This information is configured and managed by a trusted entity on the platform. The realm-ID aware CPU tags memory transactions with the realm-ID (RID_{req}). The processor could determine the RID_{req} based on several factors including but not limited to the identity/privilege of the currently executing process, the type of memory being accessed, current CPU mode, etc. The processor includes a realm-ID aware cache hierarchy that prevents cross-realm accesses of data while it is resident in the cache. This includes an enhanced cache coherence engine that prevents leakage through the coherence protocols across different realms. The processor includes a realm-ID enforcement engine at the memory controller that verifies that the RID_{req} on a given incoming memory request matches the realm-ID in its trusted access control information (RID_{ref}) for that memory address.

The Access Control Information is a data structure available to the memory controller and contains information regarding the set of realm-IDs that can access a given memory address. It is setup correctly and managed by a trusted entity on the platform. The actual implementation of this data structure could have many flavors. In one implementation, one could use a simple set of range registers covering different portions of the address space for coarse-grained access control across realms. Alternatively, one could use an actual flat table covering all of memory and maintain it at a certain granularity (e.g., per cache-line, for a given block (4KB, 2MB, 1GB) of memory). Furthermore, this table could be constructed as a blacklist or a whitelist.

The realm-aware enhanced processor tags every physical address that is generated at the end of a virtual to physical address translation with additional realm-ID bits. The processor can determine which realm-ID to use in many ways. For example, it could use the processor mode, intermediate information in the address translation process (e.g., a bit in the GVA/GPA or any paging structure), realm-ID information specified in special registers (if any) or any combination of the above to determine the realm-ID. Irrespective of how the realm-ID is generated, the processor incorporates it into ,e.g. , every memory request before the request is sent to the cache hierarchy.

The enhanced realm-ID aware cache hierarchy not only stores the realm-ID alongside every cache-line but also uses it at the time of determining cache hits and misses. More specifically, cache hits require a match not only on the physical address but also the associated realm-ID. This prevents software belonging to one realm from access the data belong to another realm within the cache through aliased memory accesses. Similarly, during the execution of cache coherence protocols, snoop hit and miss determination mechanisms are enhanced to take into account the realm-ID in addition to the actual physical address itself. Finally, memory-bound directory protocol mechanisms that are typically employed in multi-socket configurations to achieve efficient cache coherence are also modified to account for the realm-ID; more specifically, directory state updates now include the realm-ID of the associated memory request which is used by the memory controller.

The memory controller includes a realm-ID enforcement engine. This engine verifies the legitimacy of an incoming memory request based on its accompanying realm-ID. More specifically, it checks that the realm-ID in the incoming request should be allowed to access the target memory address using the access control table. If the access is deemed valid, i.e., the realm-ID checks pass, the memory request is processed as usual; otherwise, it is handled as follows:
1. if the request was a memory read (Fig. 3c), then the memory controller returns a well-defined data value along with a data-synchronous error indication. The data value itself is fixed and is independent of the actual content of memory that was accessed. The data-synchronous error indication can be used to prevent consumption of the returned value and potentially cause an architectural fault to be signaled in response to the erroneous read. Overall, this prevents cross-realm memory reads.
2. If the request was a memory write (Fig. 3d), then the memory controller drops the request. This prevents cross-realm memory writes.
3. Any secondary metadata updates of related to an illegal cross-realm memory access are also dropped. Examples include cryptographic integrity of the related data, data state tracking information. Etc. This prevents secondary metadata pollution/corruption due to cross-realm accesses.

At a high level, the design of a semiconductor chip can be viewed as a combination of logic and state elements. The logic elements (e.g., as implemented with custom designed logic circuitry) perform complex operations on information. By contrast, the state elements (e.g., registers, scratch-pad memories, caches, etc.) hold both the input information that is processed by the logic elements, and, the output information that is generated by the logic elements in response to the input information. Often, the output information that a state element receives from a preceding logic element becomes input information that the state element provides to a following logic element.

Thus, the design of a semiconductor chip can be viewed as a complex network of interconnected logical elements where state elements are positioned along the connections between logic elements. Over the run-time of a semiconductor chip, the state elements continually receive and forward information, which, in turn, corresponds to the flow of processed information through the semiconductor chip.

### EXEMPLARY COMPUTER ARCHITECTURES

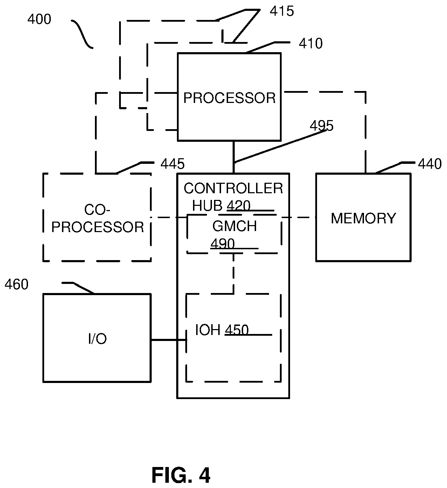

FIGs. 4-8 are block diagrams of exemplary computer architectures. Other system designs and configurations known in the art for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. Any of these computing architectures and/or systems/designs may include multiple semiconductor chips in a single package as described at length above.

Referring now to FIG. 4, shown is a block diagram of a system 400 in accordance with one embodiment of the present invention. The system 400 may include one or more processors 410, 415, which are coupled to a controller hub 420. In one embodiment the controller hub 420 includes a graphics memory controller hub (GMCH) 490 and an Input/Output Hub (IOH) 450 (which may be on separate chips); the GMCH 490 includes memory and graphics controllers to which are coupled memory 440 and a coprocessor 445; the IOH 450 couples input/output (I/O) devices 460 to the GMCH 490. Alternatively, one or both of the memory and graphics controllers are integrated within the processor (as described herein), the memory 440 and the coprocessor 445 are coupled directly to the processor 410, and the controller hub 420 in a single chip with the IOH 450.

The optional nature of additional processors 415 is denoted in FIG. 4 with broken lines. Each processor 410, 415 may include one or more of the processing cores described herein and may be some version of the processor 1200.

The memory 440 may be, for example, dynamic random access memory (DRAM), non-volatile byte addressable memory, or a combination of the two. For at least one embodiment, the controller hub 420 communicates with the processor(s) 410, 415 via a multi-drop bus, such as a frontside bus (FSB), point-to-point interface such as QuickPath Interconnect (QPI), or similar connection 495.

In one embodiment, the coprocessor 445 is a special-purpose processor, such as, for example, a high-throughput MIC processor, a network or communication processor, compression engine, graphics processor, GPGPU, embedded processor, or the like. In one embodiment, controller hub 420 may include an integrated graphics accelerator. In various systems more than one coprocessor exists.

There can be a variety of differences between the physical resources 410, 415 in terms of a spectrum of metrics of merit including architectural, microarchitectural, thermal, power consumption characteristics, and the like.

In one embodiment, the processor 410 executes instructions that control data processing operations of a general type. Embedded within the instructions may be coprocessor instructions. The processor 410 recognizes these coprocessor instructions as being of a type that should be executed by the attached coprocessor 445. Accordingly, the processor 410 issues these coprocessor instructions (or control signals representing coprocessor instructions) on a coprocessor bus or other interconnect, to coprocessor 445. Coprocessor(s) 445 accept and execute the received coprocessor instructions.

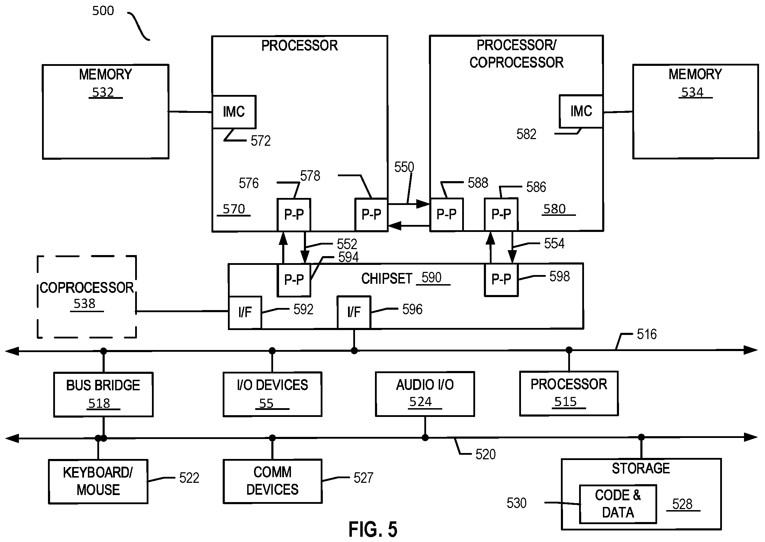

Referring now to FIG. 5, shown is a block diagram of a first more specific exemplary system 500 in accordance with an embodiment of the present invention. As shown in FIG. 5, multiprocessor system 500 is a point-to-point interconnect system, and includes a first processor 570 and a second processor 580 coupled via a point-to-point interconnect 550. In some embodiments, processors 570 and 580 are respectively processors 410 and 415, while coprocessor 538 is coprocessor 445. In another embodiment, processors 570 and 580 are respectively processor 410 coprocessor 445.

Processors 570 and 580 are shown including integrated memory controller (IMC) units 572 and 582, respectively. Processor 570 also includes as part of its bus controller units point-to-point (P-P) interfaces 576 and 578; similarly, second processor 580 includes P-P interface circuits 586 and 588. Processors 570, 580 may exchange information via a point-to-point (P-P) interface 550 using P-P interface circuits 578, 588. As shown in FIG. 5, IMCs 572 and 582 couple the processors to respective memories, namely a memory 532 and a memory 534, which may be portions of main memory locally attached to the respective processors.

Processors 570, 580 may each exchange information with a chipset 590 via individual P-P interfaces 552, 554 using point to point interface circuits 576, 594, 586, 598. Chipset 590 may optionally exchange information with the coprocessor 538 via a high-performance interface 592. In one embodiment, the coprocessor 538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors yet connected with the processors via P-P interconnect, such that either or both processors' local cache information may be stored in the shared cache if a processor is placed into a low power mode.

Chipset 590 may be coupled to a first bus 516 via an interface 596. In one embodiment, first bus 516 may be a Peripheral Component Interconnect (PCI) bus, or a bus such as a PCI Express bus or another third generation I/O interconnect bus, although the scope of the present invention is not so limited.

As shown in FIG. 5, various I/O devices 514 may be coupled to first bus 516, along with a bus bridge 518 which couples first bus 516 to a second bus 520. In one embodiment, one or more additional processor(s)515, such as coprocessors, high-throughput MIC processors, GPGPU's, accelerators (such as, e.g., graphics accelerators or digital signal processing (DSP) units), field programmable gate arrays, or any other processor, are coupled to first bus 516. In one embodiment, second bus 520 may be a low pin count (LPC) bus. Various devices may be coupled to a second bus 520 including, for example, a keyboard and/or mouse 522, communication devices 527 and a storage unit 528 such as a disk drive or other mass storage device which may include instructions/code and data 530, in one embodiment. Further, an audio I/O 524 may be coupled to the second bus 520. Note that other architectures are possible. For example, instead of the point-to-point architecture of FIG. 5, a system may implement a multi-drop bus or other such architecture.

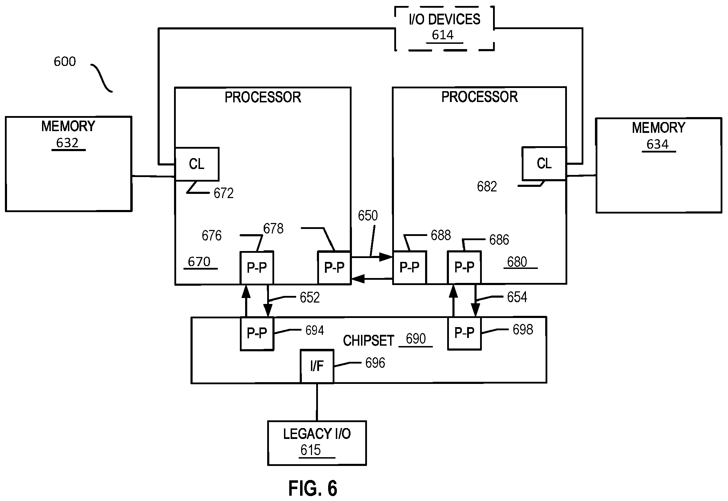

Referring now to FIG. 6, shown is a block diagram of a second more specific exemplary system 600 in accordance with an embodiment of the present invention. Like elements in FIGs. 5 and 6 bear like reference numerals, and certain aspects of FIG. 5 have been omitted from FIG. 6 in order to avoid obscuring other aspects of FIG. 6.

FIG. 6 illustrates that the processors 570, 580 may include integrated memory and I/O control logic ("CL") 672 and 682, respectively. Thus, the CL 672, 682 include integrated memory controller units and include I/O control logic. FIG. 6 illustrates that not only are the memories 532, 534 coupled to the CL 672, 682, but also that I/O devices 614 are also coupled to the control logic 672, 682. Legacy I/O devices 615 are coupled to the chipset 590.

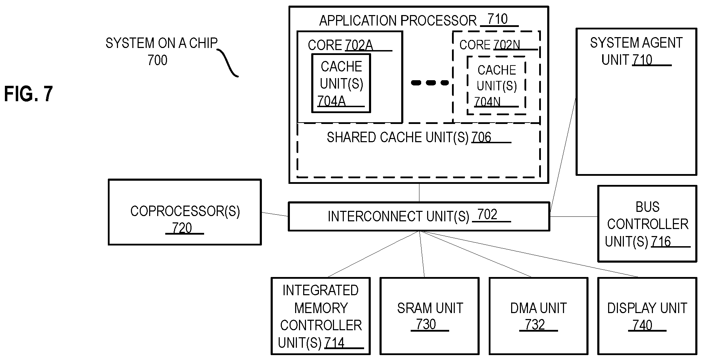

Referring now to FIG. 7, shown is a block diagram of a SoC 700 in accordance with an embodiment of the present invention. Similar elements in FIG. 12 bear like reference numerals. Also, dashed lined boxes are optional features on more advanced SoCs. In FIG. 7, an interconnect unit(s) 702 is coupled to: an application processor 710 which includes a set of one or more cores 702A-N, which include cache units 704A through 704N, and shared cache unit(s) 706; a system agent unit 710; a bus controller unit(s) 716; an integrated memory controller unit(s) 714; a set of one or more coprocessors 720 which may include integrated graphics logic, an image processor, an audio processor, and a video processor; an static random access memory (SRAM) unit 730; a direct memory access (DMA) unit 732; and a display unit 740 for coupling to one or more external displays. In one embodiment, the coprocessor(s) 720 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 530 illustrated in FIG. 5, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### EMULATION (INCLUDING BINARY TRANSLATION, CODE MORPHING, ETC.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

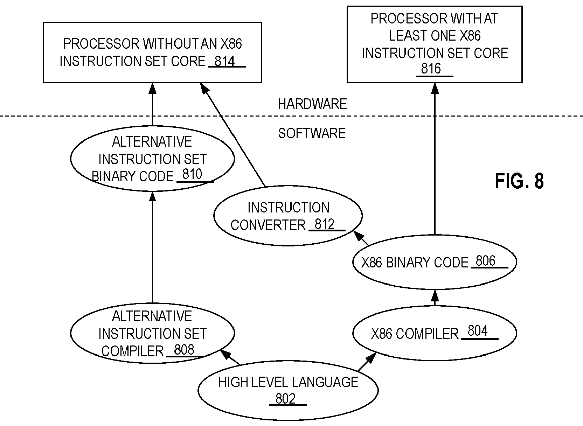

FIG. 8 is a block diagram contrasting the use of a software instruction converter to convert binary instructions in a source instruction set to binary instructions in a target instruction set according to some embodiments of the invention. In the illustrated embodiment, the instruction converter is a software instruction converter, although alternatively the instruction converter may be implemented in software, firmware, hardware, or various combinations thereof. FIG. 8 shows a program in a high-level language 802 may be compiled using an x86 compiler 804 to generate x86 binary code 806 that may be natively executed by a processor with at least one x86 instruction set core 816. The processor with at least one x86 instruction set core 816 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 804 represents a compiler that is operable to generate x86 binary code 806 (e.g., object code) that can, with or without additional linkage processing, be executed on the processor with at least one x86 instruction set core 816. Similarly, FIG. 8 shows the program in the high level language 802 may be compiled using an alternative instruction set compiler 808 to generate alternative instruction set binary code 810 that may be natively executed by a processor without at least one x86 instruction set core 814 (e.g., a processor with cores that execute the MIPS instruction set of MIPS Technologies of Sunnyvale, CA and/or that execute the ARM instruction set of ARM Holdings of Sunnyvale, CA). The instruction converter 812 is used to convert the x86 binary code 806 into code that may be natively executed by the processor without an x86 instruction set core 814. This converted code is not likely to be the same as the alternative instruction set binary code 810 because an instruction converter capable of this is difficult to make; however, the converted code will accomplish the general operation and be made up of instructions from the alternative instruction set. Thus, the instruction converter 812 represents software, firmware, hardware, or a combination thereof that, through emulation, simulation or any other process, allows a processor or other electronic device that does not have an x86 instruction set processor or core to execute the x86 binary code 806.

### Examples

A processor is described. The processor includes memory controller logic circuitry. The memory controller logic circuitry is to enforce a plurality of realms in a memory. The plurality of realms have different isolation mechanisms. The processor has processing core logic circuitry. The processing core logic circuitry is to issue a memory access request comprising a physical address that is targeted by the software process or thread. The software process or thread is to be executed by the processing core logic circuitry. The memory access request also has an identifier of a realm of the plurality of realms. The processor has information keeping space to correlate physical addresses of the memory to different ones of the different realms. The memory controller logic circuitry is to service the memory access request if the identifier corresponds to the realm identified from the information keeping space for the physical address.

In various embodiments the processor has a cache between the processing core logic circuitry and the memory controller logic circuitry. The cache has access to third register space to correlate the physical addresses of the memory to the different ones of the different realms. The cache is to service the memory access request if the physical address matches the physical address of an entry in the cache and if the identifier corresponds to the realm identified from the third register space for the physical address. In further embodiments the cache is one of an L2, L3 or L4 cache.

In various embodiments the processor includes register space to correlate the software process or thread to one of the different realms, and, the register space is part of the processing core logic circuitry.

In various embodiments the information keeping space is part of the memory controller logic circuitry.

In various embodiments the different realms comprise: a first realm and a second realm. In various further embodiments the different isolation mechanisms include: a first encryption/decryption access process for one of the first and second realms, and, a second encryption/decryption access process for another of the first and second realms. In various further embodiments the different isolation mechanisms include a layer of software between a virtual machine monitor and a virtual machine for one of the first or second realms.

A computing system is described. The computer system includes a network interface, a mass storage interface, a main memory, and a processor. The processor includes: i) memory controller logic circuitry, the memory controller logic circuitry is to enforce a plurality of different realms within the main memory, the different realms having different isolation mechanisms; ii) register space to correlate a software process or thread to one of the different realms; iii) processing core logic circuitry, the processing core logic circuitry is to issue a memory access request comprising a physical address that is targeted by the software process or thread, the software process or thread is to be executed by the processing core logic circuitry, the memory access request also has an identifier of the one realm, the identifier is sourced from the register space; iv) information keeping space to correlate physical addresses of the main memory to different ones of the different realms, the memory controller logic circuitry to service the memory access request if the identifier corresponds to the realm identified from the information keeping space for the physical address.

The computing system can also include the various embodiments and various further embodiments described above.

A method has been described. The method includes executing a memory access instruction for a software process or thread. The method includes creating a memory access request for the memory access instruction having a physical memory address and a first identifier of a realm that the software process or thread execute from. The method includes receiving the memory access request and determining a second identifier of a realm from the physical memory address. The method also includes servicing the memory access request because the first identifier matches the second identifier.

In various embodiments the receiving and servicing are performed by a main memory controller.

In various embodiments the receiving and the servicing are performed by a cache.

In various embodiments the realm comprises an encryption/decryption access process to/from the main memory.

## Claims

1. A processor (200), comprising:
memory controller logic circuitry (109;204), the memory controller logic circuitry to enforce a plurality of realms (108_1,108_2,108_3) in a memory (103), the plurality of realms having different isolation mechanisms;
processing core logic circuitry (102;201), the processing core logic circuitry to issue a memory access request comprising a physical address that is targeted by the software process or thread, the software process or thread executed by the processing core logic circuitry, the memory access request also comprising an identifier of a realm of the plurality of realms (108_1,108_2,108_3);
information keeping space to correlate physical addresses of the memory to different ones of the different realms (108_1,108_2,108_3), the memory controller logic circuitry (109;204) to service the memory access request if the identifier corresponds to the realm identified from the information keeping space for the physical address,
wherein the different realms (108_1,108_2,108_3) comprise a first realm and a second realm, wherein the processor is **characterized in that** the different isolation mechanisms comprise a first encryption/decryption access process for one of the first and second realms and a second encryption/decryption access process for another of the first and second realms.

2. The processor (200) of claim 1 further comprising a cache (223) between the processing core logic circuitry (102;201) and the memory controller logic circuitry (109;204), the cache having access to third register space to correlate the physical addresses of the memory to the different ones of the different realms (108_1,108_2,108_3), the cache (223) to service the memory access request if the physical address matches the physical address of an entry in the cache and if the identifier corresponds to the realm identified from the third register space for the physical address.

3. The processor of claim 2 wherein the cache (223) is one of an L2, L3 or L4 cache.

4. The processor (200) of claim 1 wherein the processor comprises register space (202,203) to correlate the software process or thread to one of the different realms (108_1,108_2,108_3), and, the register space (202;203) is part of the processing core logic circuitry (201).

5. The processor (200) of claim 1 wherein the information keeping space is part of the memory controller logic circuitry (109;204).

6. The processor (200) of claim 5 wherein the different isolation mechanisms comprise a layer of software between a virtual machine monitor (101) and a virtual machine (104) for one of the first or second realms.

7. A computing system, comprising the subject matter of any of claims 1 through 6 above.

8. A method, comprising:
executing (301) a memory access instruction for a software process or thread;
creating (302) a memory access request for the memory access instruction that comprises a physical memory address and a first identifier of a realm that the software process or thread execute from, wherein the realm is a realm of a plurality of realms (108_1,108_2,108_3) in a memory, the plurality of realms (108_1,108_2,108_3) have different isolation mechanisms, the different realms (108_1,108_2,108_3) comprise a first realm and a second realm, and said different isolation mechanisms comprise a first encryption/decryption access process for one of the first and second realms and a second encryption/decryption access process for another of the first and second realms;
receiving (303) the memory access request and determining a second identifier of a realm from the physical memory address; and,
servicing (304) the memory access request because the first identifier matches the second identifier.

## Patentansprüche

1. Prozessor (200), umfassend:
eine Speichercontroller-Logikschaltung (109, 204), wobei die Speichercontroller-Logikschaltung eine Vielzahl von Bereichen (108_1,108_2,108_3) in einem Speicher (103) durchsetzen soll, wobei die Vielzahl von Bereichen unterschiedliche Isolierungsmechanismen aufweisen;
Verarbeitungskern-Logikschaltung (102, 201), wobei die Verarbeitungskern-Logikschaltung eine Speicherzugriffsanforderung ausgeben soll, die eine physische Adresse umfasst, auf die der Softwareprozess oder Thread abzielt, wobei der Softwareprozess oder Thread von der Verarbeitungskern-Logikschaltung ausgeführt wird, wobei die Speicherzugriffsanforderung auch eine Kennung eines Bereichs der Vielzahl von Bereichen (108_1,108_2,108_3) umfasst;
Informationsverwahrungsraum zur Korrelierung von physischen Adressen des Speichers mit verschiedenen der verschiedenen Bereiche (108_1, 108_2, 108_3), wobei die Speichercontroller-Logikschaltung (109, 204) die Speicherzugriffsanforderung durchführt, wenn die Kennung dem Bereich entspricht, der in dem Informationsverwahrungsraum für die physische Adresse identifiziert wurde,
wobei die verschiedenen Bereiche (108_1,108_2,108_3) einen ersten Bereich und einen zweiten Bereich umfassen, wobei der Prozessor **dadurch gekennzeichnet ist, dass** die verschiedenen Isolierungsmechanismen einen ersten Verschlüsselungs-/Entschlüsselungszugriffsprozess für einen von dem ersten und zweiten Bereich und einen zweiten Verschlüsselungs-/Entschlüsselungszugriffsprozess für einen anderen von dem ersten und zweiten Bereich umfassen.

2. Prozessor (200) nach Anspruch 1, ferner umfassend einen Cache (223) zwischen der Verarbeitungskern-Logikschaltung (102, 201) und der Speichercontroller-Logikschaltung (109, 204), wobei der Cache Zugriff auf einen dritten Registerraum hat, um die physischen Adressen des Speichers mit verschiedenen der verschiedenen Bereiche (108_1,108_2,108_3) zu korrelieren, wobei der Cache (223) die Speicherzugriffsanforderung durchführen soll, wenn die physische Adresse mit der physischen Adresse eines Eintrags in dem Cache übereinstimmt und wenn die Kennung dem Bereich entspricht, der in dem dritten Registerraum für die physische Adresse identifiziert wird.

3. Prozessor nach Anspruch 2, wobei der Cache (223) einer von einem L2-, L3- oder L4-Cache ist.

4. Prozessor (200) nach Anspruch 1, wobei der Prozessor einen Registerraum (202, 203) umfasst, um den Softwareprozess oder Thread mit einem der verschiedenen Bereiche (108_1, 108_2, 108_3) zu korrelieren, und wobei der Registerraum (202, 203) Teil der Verarbeitungskern-Logikschaltung (201) ist.

5. Prozessor (200) nach Anspruch 1, wobei der Informationsverwahrungsraum Teil der Speichercontroller-Logikschaltung (109, 204) ist.

6. Prozessor (200) nach Anspruch 5, wobei die verschiedenen Isolierungsmechanismen eine Softwareschicht zwischen einem Virtual-Machine-Monitor (101) und einer virtuellen Maschine (104) für einen von dem ersten oder zweiten Bereich umfassen.

7. Rechensystem, umfassend den Gegenstand nach einem der Ansprüche 1 bis 6.

8. Verfahren, umfassend:
Ausführen (301) einer Speicherzugriffsanweisung für einen Softwareprozess oder Thread;
Erstellen (302) einer Speicherzugriffsanforderung für die Speicherzugriffsanweisung, die eine physische Speicheradresse und eine erste Kennung eines Bereichs umfasst, von dem aus der Softwareprozess oder Thread ausgeführt wird, wobei der Bereich ein Bereich einer Vielzahl von Bereichen (108_1, 108_2, 108_3) in einem Speicher ist, die Vielzahl von Bereichen (108_1, 108_2, 108_3) unterschiedliche Isolierungsmechanismen aufweisen, die verschiedenen Bereiche (108_1, 108_2, 108_3) einen ersten Bereich und einen zweiten Bereich umfassen und die unterschiedlichen Isolierungsmechanismen einen ersten Verschlüsselungs-/Entschlüsselungszugriffsprozess für einen von dem ersten und zweiten Bereich und einen zweiten Verschlüsselungs-/Entschlüsselungszugriffsprozess für einen anderen von dem ersten und zweiten Bereich umfassen;
Empfangen (303) der Speicherzugriffsanforderung und Bestimmen einer zweiten Kennung eines Bereichs in der physischen Speicheradresse; und
Durchführen (304) der Speicherzugriffsanforderung, weil die erste Kennung mit der zweiten Kennung übereinstimmt.

## Revendications

1. Processeur (200) comprenant :
un circuit logique de contrôleur de mémoire (109 ; 204), le circuit logique de contrôleur de mémoire étant destiné à mettre en œuvre une pluralité de domaines (108_1, 108_2, 108_3) dans une mémoire (103), la pluralité de domaines ayant différents mécanismes d'isolation ;
un circuit logique de coeur de traitement (102 ; 201), le circuit logique de coeur de traitement étant destiné à émettre une demande d'accès à la mémoire comprenant une adresse physique ciblée par le processus ou le fil d'exécution logiciel, le processus ou le fil d'exécution logiciel étant exécuté par le circuit logique de coeur de traitement, la demande d'accès à la mémoire comprenant également un identificateur d'un domaine de la pluralité de domaines (108_1, 108_2, 108_3) ;
un espace de conservation des informations pour corréler les adresses physiques de la mémoire aux différents domaines (108_1, 108_2, 108_3), le circuit logique de contrôleur de mémoire (109 ; 204) étant destiné à répondre à la demande d'accès à la mémoire si l'identifiant correspond au domaine identifié à partir de l'espace de conservation des informations pour l'adresse physique,
dans lequel les différents domaines (108_1, 108_2, 108_3) comprennent un premier domaine et un deuxième domaine,
dans lequel le processeur est **caractérisé par le fait que** les différents mécanismes d'isolation comprennent un premier processus d'accès au cryptage/décryptage pour l'un des premier et deuxième domaines et un deuxième processus d'accès au cryptage/décryptage pour un autre des premier et deuxième domaines.

2. Processeur (200) selon la revendication 1 comprenant en outre un cache (223) entre le circuit logique de coeur de traitement (102 ; 201) et le circuit logique de contrôleur de mémoire (109 ; 204), le cache ayant accès à un troisième espace de registre pour corréler les adresses physiques de la mémoire aux différents domaines (108_1, 108_2, 108_3), le cache (223) devant répondre à la demande d'accès à la mémoire si l'adresse physique correspond à l'adresse physique d'une entrée dans le cache et si l'identificateur correspond au domaine identifié à partir du troisième espace de registre pour l'adresse physique.

3. Processeur selon la revendication 2, dans lequel le cache (223) est l'un d'un cache L2, L3 ou L4.

4. Processeur (200) selon la revendication 1, dans lequel le processeur comprend un espace de registre (202, 203) pour corréler le processus ou le fil d'exécution logiciel à l'un des différents domaines (108_1, 108_2, 108_3), et l'espace de registre (202 ; 203) fait partie du circuit logique de coeur de traitement (201).

5. Processeur (200) selon la revendication 1, dans lequel l'espace de conservation des informations fait partie du circuit logique de contrôleur de mémoire (109 ; 204) .

6. Processeur (200) selon la revendication 5, dans lequel les différents mécanismes d'isolation comprennent une couche logicielle entre un moniteur de machine virtuelle (101) et une machine virtuelle (104) pour l'un des premier ou deuxième domaines.

7. Système informatique, comprenant l'objet de l'une quelconque des revendications 1 à 6 ci-dessus.

8. Procédé comprenant les étapes suivantes :
exécuter (301) une instruction d'accès à la mémoire pour un processus ou un fil d'exécution logiciel ;
créer (302) une demande d'accès à la mémoire pour l'instruction d'accès à la mémoire qui comprend une adresse de mémoire physique et un premier identificateur d'un domaine à partir duquel le processus ou le fil d'exécution logiciel s'exécute, dans lequel le domaine est un domaine d'une pluralité de domaines (108_1, 108_2, 108_3) dans une mémoire, la pluralité de domaines (108_1, 108_2, 108_3) ayant différents mécanismes d'isolation, les différents domaines (108_1, 108_2, 108_3) comprenant un premier domaine et un deuxième domaine, et lesdits différents mécanismes d'isolation comprenant un premier processus d'accès au cryptage/décryptage pour l'un des premier et deuxième domaines et un deuxième processus d'accès au cryptage/décryptage pour un autre des premier et deuxième domaines ;
recevoir (303) la demande d'accès à la mémoire et déterminer un deuxième identifiant d'un domaine à partir de l'adresse de mémoire physique ; et
traiter (304) la demande d'accès à la mémoire car le premier identifiant correspond au deuxième identifiant.
